# EUROPÄISCHE PATENTSCHRIFT

(11) **EP 2 171 651 B1**
(45) Veröffentlichungstag und Bekanntmachung des Hinweises auf die Patenterteilung: **14.09.2011**
(21) Anmeldenummer: 08786162.1
(22) Anmeldetag: 16.07.2008
(51) Int. Cl.: G06K 19/07, G06K 19/077

(54) **VORRICHTUNG MIT MINDESTENS EINER VERPACKUNGSEINHEIT MIT EINEM ZUR RADIOFREQUENZ - IDENTIFIKATION DIENENDEN RFID - CHIP UND VERFAHREN DAZU**
APPARATUS HAVING AT LEAST ONE PACKAGING UNIT WITH AN RFID CHIP WHICH IS USED FOR RADIO-FREQUENCY IDENTIFICATION, AND METHOD THEREFOR
DISPOSITIF COMPRENANT AU MOINS UNE UNITÉ D'EMBALLAGE DOTÉE D'UNE PUCE RFID SERVANT À L'IDENTIFICATION PAR RADIOFRÉQUENCE ET PROCÉDÉ CORRESPONDANT

(30) Priorität: 21.07.2007 DE 102007034155
(43) Veröffentlichungstag der Anmeldung: 07.04.2010
(73) Patentinhaber: Boehringer Ingelheim International GmbH, 55216 Ingelheim am Rhein (DE)
(72) Erfinder: BALTHES, Eduard, 55216 Ingelheim am Rhein (DE); GESER, Johannes, 55216 Ingelheim am Rhein (DE)
(74) Vertreter: Hammann, Heinz
(86) Internationale Anmeldenummer: PCT/EP2008/059263
(87) Internationale Veröffentlichungsnummer: WO 2009/013189

(56) Entgegenhaltungen:
- WO-A-02/05039
- US-A1- 2006 202 830

## Beschreibung

Die Erfindung bezieht sich auf ein System oder eine Vorrichtung mit mindestens einer Verpackungseinheit mit einem zur Radiofrequenz-Identifikation dienenden RFID-Chip, der einen Schaltkreis sowie eine Antennenstruktur aufweist, und einer Sende-/ Empfangs-einheit zum Senden eines Sendesignals und/oder Empfangen eines Antwortsignals von dem RFID-Chip, wobei das Antwortsignals mittels einer an die Sende-/Empfangseinheit angeschlossenen Auswerteeinheit auswertbar ist.

Die Erfindung betrifft auch ein Verfahren zur Identifikation von Inhalt und/oder Zustand einer Verpackungseinheit.

Die Entwicklung von Arzneimitteln wird zunehmend in den Bereich hoch wirksamer, gleichzeitig jedoch relativ empfindlicher Arzneimittel vorangetrieben. Dies erhöht die Ansprüche an deren Verpackung und Umverpackung. Folienbehälter bzw. Kavitäten auf so genannten Blisterkarten dienen beispielsweise unter anderem dazu, pharmazeutische Wirkstoffformulierungen vor Umwelteinflüssen von außen zu schützen, die unter Umständen die pharmazeutische Qualität der Wirkstoffformulierung beeinflussen können.

Um relativ hohe Barriere-Eigenschaften gegenüber Feuchte und Gasen in Verpackungen zu erzielen, wird häufig auf Aluminium-Verbund-Folien zurückgegriffen, die jedoch insofern nachteilig sind, als daraus gefertigte Umverpackungen, beispielsweise so genannte Aluminium-Pouches, undurchsichtig sind und eine Identifikation des Inhalts, beispielsweise für einen Abgleich mit den Angaben auf der Umverpackung, nicht möglich ist, ohne dass die Umverpackung zerstört wird.

Bei derartigen Arzneimitteln spielt unter anderem die über das Produkt sowie über die einzelnen Verpackungskomponenten eingebrachte Feuchte in die Verpackung, aber auch die während der Lagerung gegebenenfalls in die Verpackung eindringende Feuchte eine wesentliche Rolle. Es ist daher von großem Interesse, die Feuchte in einer Verpackung möglichst schnell und möglichst in vielen Verpackungskavitäten (z.B. bei Blisterkarten) gleichzeitig, mit hoher Genauigkeit und vor allem zerstörungsfrei zu bestimmen. Zudem sollte diese Messung auch mit vertretbarem Aufwand erfolgen.

In Zusammenhang mit der Identifikation von Verpackungsinhalten werden inzwischen häufig Radiofrequenz-Identifikations-systeme eingesetzt, die so genannte RFID-Chips nutzen, wobei RFID für "Radio Frequency Identification Device" steht. Derartige RFID-Chips (Transponder) können mit einem Lesegerät erfasst werden. Je nach Transpondertyp kann im einfachsten Fall die Anwesenheit des Transponders oder aber eine Codierung registriert werden, die vom Transponder an das Lesegerät zurückgesendet wird. Derartige RFID-Chips sind in der Fachliteratur (z.B. K. Finkenzeller: RFID-Handbuch, 4. Auflage, Carl Hauser Verlag München, ISBN 3-446-40398-1) hinreichend beschrieben.

Die WO02/05039 A1 beschreibt eine Blisterpackung mit rasterförmig angeordneten Zellen. Jede Zelle ist durch eine zerbrechliche and versiegelt, in deren Nähe sich eine trennbare Leiterbahn befindet. Am Zerreißen eine solchen Leiterbahn erkennt ein Computerchip die Beschädigung einer jede Zelle. Ein RF-Transmitter ist mit dem Computerchip verbunden und sendet die Information über den Gebrauch jedes im Blister gelagerten Medikamentes an einen entfernten Empfänger. Die Blisterpackung umfasst einen an den Computerchip angeschlossenen Sensor zur Messung von Temperatur, Feuchte oder Lichteinfall in der äußeren Umgebung der Blisterpackung. Ein Alarm wird erzeugt, wenn die vom Sensor erkannten Werte außerhalb der für das in der Blisterpackung gelagerten Medikament zulässigen Werte liegen. In einer Variante enthält die Packung auch ein Gehäuse mit Stromversorgung, Datenspeicher, einen RF-Empfänger und einen Signalgeber, so dass beispielsweise der Anwender an die Zeit zur Medikamenteneinnahme erinnert werden kann.

Die US2006202830 A1 beschreibt eine Verpackungseinheit mit einem integrierten RFID-chip, wobei eine metallische Aussenhülle der Verpackungseinheit als RFID Antenne funktioniert.

Der Einsatz von RFID-Chips zur Identifikation oder zur Zustandsbestimmung innerhalb von Verpackungen mit einer metallisch leitfähigen Außenhülle konnte bislang nicht erfolgen, da der so genannte Skin-Effekt ein Durchdringen der Außenhülle verhindert.

Es ist Aufgabe der Erfindung, eine Vorrichtung und ein Verfahren der eingangs genannten Art zu schaffen, die bzw. das die zuvor genannten Nachteile beseitigt.

Erfindungsgemäß wird die Aufgabe gelöst durch ein System gemäß Anspruch 1 und ein Verfahren gemäß Anspruch 16.

Die durch den Skin-Bffekt hervorgerufene Abschirmung elektromagnetischer Strahlung bei metallisch leitfähigen Verpackungen verhinderte bisher insbesondere den Einsatz von RFID-Chips in z.B. Aluminium-Verbund-Pouches. Dabei wird als Skin-Tiefe δ bzw. Eindringtiefe für elektromagnetische Strahlung diejenige Dicke einer Metallschicht bezeichnet, bei der das eingestrahlte elektromagnetische Feld durch den Skin-Effekt gerade auf den 1/e-fachen Wert gedämpft wird, wobei e die Euler'sche Zahl bedeutet. Dabei ist die Skin-Tiefe δ bei gleich bleibenden Materialeigenschaften, wie die Leitfähigkeit, frequenzabhängig und steigt mit sinkender Frequenz stark an. Gerade diese Eigenschaft des Skin-Effektes kann dazu genutzt werden, die bisherigen Schwierigkeiten beim Auslesen eines RFID-Chips innerhalb eines Aluminium-Pouches zu überwinden.

Experimentell konnte gezeigt werden, dass bei einer hinreichend niedrigen Arbeitsfrequenz der RFID-Chip innerhalb eines Aluminium-Pouches von außen reproduzierbar und beliebig oft aktiviert und ausgelesen werden konnte. Damit kann der Inhalt der Verpackung eindeutig und dennoch zerstörungsfrei identifiziert werden.

Für verwendete Aluminium-Verbund-Pouches mit einer Aluminiumschichtdicke von ca. 20 µm, was einem Bereich für die Sperrfrequenz von etwa 100 MHz bis 200 MHz entspricht, können RFID-Chips, die eine Arbeitsfrequenz LF-RFID (Niedrig-Frequenz-RFID) im Bereich von 20 bis 500 kHz oder eine Arbeitsfrequenz HF-RFID (Hoch-Frequenz-RFID) im Bereich von 3 bis 30 MHz aufweisen, erfolgreich eingesetzt werden.

Prinzipiell sind alle Arbeitsfrequenzen unterhalb der Sperrfrequenz für einen sicheren Betrieb möglich. Allerdings sind lediglich RFID-Cbips mit den oben genannten Arbeitsfrequenzbereichen kommerziell erhältlich. Ein weiterer Vorteil ergibt sich daraus, dass diese RFID-Chips passiv, d.h. ohne zusätzliche Spannungsquelle, funktionieren, wodurch der Einsatz erheblich vereinfacht ist Darüber hinaus vermindert die kurze Reichweite dieser RFID-Chips eine Verwechslungsgefahr bzw. ein Übersprechen beim Auslesen nahe beieinander liegender Verpackungen mit RFID-Chips, die darüber hinaus feuchteresistent sind.

Die Auswahl geeigneter RFID-Chips wird durch die Berechnung der material- und schichtdickenspezifischen Abschwächung der elektromagnetischen Strahlung der Sende-/Empfangseinheit ermöglicht. Die erforderliche Sendeleistung der Sende-/ Empfangseinheit kann ebenfalls berechnet und ggf. angepasst werden.

In Ausgestaltung weist der RFID-Chip einen Sensor auf, der das Antwortsignal des RFID-Chips beeinflusst. Bevorzugt wird dabei das Antwortsignal des RFID-Chips mittels des an den RFID-Chip angeschlossenen bzw. in den RFID-Chip integrierten Sensors hinsichtlich seiner Kodierung und/oder seiner Antwortfrequenz beeinflusst und von der Sende-/Empfangseinheit bzw. der Auswerteeinheit empfangen und ausgewertet. Damit wird der Zustand im Inneren der metallischen Außenhülle erfasst und ein entsprechendes Signal nach außen gesendet. Derartige Sensoren können beispielsweise Temperatursensoren sein oder Sensoren, die auf chemische Veränderungen reagieren und das Antwortsignal entsprechend verändern. Damit ist es beispielsweise möglich, die Konzentration von chemischen Substanzen zu bestimmen.

Vorzugsweise ist der Sensor des RFID-Chips als eine Kondensatorstruktur ausgebildet ist und die Kapazität bzw. die Kapazitätsänderung der Kondensatorstruktur das Antwortsignal von dem RFID-Chip ändert, das mit einer der Auswerteeinheit zugeordneten Messanordnung auswertbar ist. Zweckmäßigerweise umfasst die Kondensatorstruktur ein Dielektrikum, dessen Dielektrizitätskonstante ε, beispielsweise aufgrund seiner Hygroskopie, von der relativen Feuchte (r.F.) bzw. von einer Gaskonzentration abhängig ist. Das Antwortsignal des RFID-Chips wird vorteilhafterweise hinsichtlich seiner Kodierung und/oder seiner Antwortfrequenz beeinflusst wird und von der die Messanordnung umfassenden Sende-/Empfangseinheit empfangen und ausgewertet. Damit lässt sich beispielsweise ein einfacher, auf Feuchte reagierender RFID-Chip realisieren, der zu einer zerstörungsfreien Feuchtebestimmung innerhalb der Verpackungseinheit genutzt werden kann.

Eine für die oben beschriebene Feuchteauswertung besonders geeignete Messanordnung zur Auswertung des Antwortsignals weist einen Messverstärker und eine durchstimmbare Kapazitätsmessbrücke auf. Das Antwortsignal des RFID-Chips wird durch den Messverstärker innerhalb der Messanordnung verstärkt und mittels der durchstimmbaren Kapazitätsmessbrücke durch Vergleich mit einer Referenzkapazität innerhalb der Kapazitätsmessbrücke die Kapazität der Kondensatorstruktur des RFID-Chips bestimmt. Damit lässt sich eine sehr empfindliche Feuchtemessung mit einer relativ hohe Genauigkeit realisieren.

Eine weitere Genauigkeitssteigerung wird dadurch erzielt, dass vor dem Verpacken des RFID-Chips mit dem Sensor bzw. der Kondensatorstruktur in die Verpackungseinheit eine Kalibrierung durchgeführt wird. Bevorzugt wird der RFID-Chip mit der Kondensatorstruktur zum Kalibrieren in einer dynamischen Sorptionswaage (DVS) bei einer definierten Temperatur bestimmten Feuchtestufen ausgesetzt, das Antwortsignal des RFID-Chips mit der Messanordnung bei den verschiedenen Feuchtestufen gemessen und daraus eine von der Feuchte abhängige Eigenfrequenz bestimmt. Dies erfolgt mittels einer hochempfindlichen kapazitiven Messbrücke. Dabei stellt der zu kalibrierende Kondensator die unbekannte Kapazität in einem Schwingkreis dar. Die gesuchten Größen ergeben sich aus der Verstimmung des Schwingkreises in Abhängigkeit von der Feuchte.

In Ausgestaltung besteht die metallische Außenhülle eines Blisters aus einer Aluminiumfolie oder einer Verbundfolie, bestehend aus mindestens einer Aluminiumschicht und mindestens einer weiteren Kunststoff- oder Papierschicht. Dabei weist die metallische Außenhülle eine 10 bis 50 µm dicke Aluminiumfolie bzw. Aluminiumschicht auf. Damit kann einerseits eine gute Diffusionssperre erzielt werden, so dass der pharmazeutische Wirkstoff entsprechend geschützt ist. Andererseits können damit noch RFID-Chips im Inneren der Verpackungseinheit sicher angesprochen werden.

Eine Verpackungsvariante sieht die metallische Außenhülle als Bestandteil einer Umverpackung vor, wie dies beispielsweise bei den Aluminium-Verbund-Pouchbeuteln der Fall ist. Der RFID-Chip wird beim Verpacken mit dem beispielsweise in Blisterkarten verpackten Wirkstoff in den Pouchbeutel gegeben, der anschließend verschweißt wird.

Zur genauen Positionierung des RFID-Chips innerhalb der Umverpackung ist der RFID-Chip innerhalb der Umverpackung auf einer separaten Kunststoffkarte (Inlay) befestigt, beispielsweise aufgeklebt. Dadurch kann das Lesegerät den RFID-Chip genau orten, wodurch die Anzahl der Fehlerquellen verringert und die Messzeit verkürzt ist. Das Inlay kann zum Schutz des Patienten gekennzeichnet und beim Öffnen der Verpackungseinheit problemlos von ihm entsorgt werden. Alternativ ist der RFID-Chip innerhalb der Umverpackung auf der Innenseite der Umverpackung befestigt.

Weist die Umverpackung mindestens eine Blisterkarte auf, auf der der RFID-Chip befestigt ist, kann ebenfalls eine genaue Positionierung des RFID-Chips innerhalb der Umverpackung erreicht werden.

Vorzugsweise ist die metallische Außenhülle Bestandteil einer Aluminium-Verbund-Deckfolie einer Blisterkarte, wobei sich der RFID-Chip auf der Blisterkarte oder innerhalb einer Kavität der Blisterkarte befindet und von der Aluminium-Verbund-Deckfolie abgedeckt ist. Zweckmäßigerweise ist der RFID-Chip innerhalb der Kavität auf einer separaten Kunststoffkarte (Inlay) befestigt, beispielsweise aufgeklebt, um in der Kavität der Blisterkarte seine Orientierung gegenüber der Deckfolie beizubehalten. Dadurch kann das Lesegerät den RFID-Chip verhältnismäßig zuverlässig auslesen, wodurch die Anzahl der Fehlerquellen verringert und die Messzeit verkürzt ist. Ein Aufkleben des RFID-Chips mit der oben genannten Kondensatorstruktur auf die Deck- bzw. Bodenfolie der Blisterkarte ist im Prinzip ebenfalls denkbar.

Typische Aluminiumverbundfolien sind zum Beispiel aus Aluminium und einem Kunststoff gefertigt. Als Material für die Kunststofffolien kann Polyvinylchlorid (PVC) Cycloolefin-Copolymer (COC), Polychlortrifluorethylen (PCFE), Polyethylen (PE), Polypropylen (PP), Polyethylenterephtalat (PET), Polycarbonat (PC), Polyester (UP), Polyacrylat, Polyamid (PA) oder andere Kunststoffe verwendet werden. Zur Verwendung sind beispielsweise Blisterverpackungen mit folgender Schichtenabfolge vorgesehen. Die Deckfolie ist aus Aluminium gefertigt und weist eine Dicke von 10 bis 80 Mikrometer, bevorzugt von 20 bis 50 Mikrometer, insbesondere von 30 bis 40 Mikrometer auf. Die Deckfolie ist mittels eines Heißsiegellackes mit der die Kavitäten aufweisenden Bodenfolie abgedichtet verbunden. Die Bodenfolie besteht auf der Produkt berührenden Seite aus einer PVC-, PP-, PE-Schicht o. Ä. mit einer Dicke zwischen 10 bis 200 Mikrometer, bevorzugt zwischen 15 und 50 Mikrometer, insbesondere zwischen 20 und 40 Mikrometern. Diese Folie ist mit einer Aluminiumfolie verbunden, deren Dicke bevorzugt 30 bis 60 Mikrometer, vorteilhafterweise 35 bis 50 Mikrometer beträgt. An die Aluminiumfolie schließt sich eine Polyamid-Folie an, die eine Dicke zwischen 10 und 40 Mikrometern, bevorzugt 15 bis 30 Mikrometer aufweist. Bei einer alternativen Bodenfolie ist die PCV-Folie auf der dem Produkt zugewandten Seite durch eine Polypropylenfolie oder dergleichen ersetzt. Bei einer bevorzugten Blisterverpackung besteht die Deckfolie aus einer 38 µm dicken Aluminiumfolie und dem Heißsiegellack. Die Bodenfolie ist auf der dem pharmazeutischen Produkt zugewandten Seite aus einer 30 µm dicken PVC-Folie, einer sich daran anschließenden 45 µm dicken Aluminium-Folie sowie einer außenseitigen 20 µm dicken Polyamidfolie gefertigt.

Die Erfindung sieht bevorzugt die Verwendung der Verpackungseinheit mit den zuvor beschriebenen Merkmalen für pharmazeutische Produkte vor. Damit können hochempfindliche pharmazeutische Produkte in ihren Verpackungen zerstörungsfrei identifiziert werden, was insbesondere hinsichtlich der Qualitätssicherung, der Fälschungssicherheit und der 1-dentifikation von Klinikmustern, d.h. bei in geringer Auflage produzierten Arzneimitteln, bei welchen eine Identifikation des Inhalts besonders wichtig ist, von Vorteil ist.

Insbesondere das oben beschriebene Verfahren zur Feuchtebestimmung kann angewendet werden zur zerstörungsfreien und genauen Messung der Feuchte in Blistern, Pouches, Polymer-Blistern, Flaschen oder allgemein in Behältern und/oder Verpackungen mit Volumina vom ml-Bereich bis hin zu größeren Containern. Aufgrund der Möglichkeit, eine Vielzahl von Verpackungseinheiten parallel messen zu können, ist eine schnelle Methode zur Feuchtebestimmung bereitgestellt. Neben Wasser ist auch die Bestimmung der Konzentration anderer Dämpfe und Gase denkbar, wobei die Empfindlichkeit des Dielektrikums der Kondensatorstruktur des RFID-Chips auf die zu messende Substanz abgestimmt sein muss. Bei der Verpackung kann es sich um das Produkt selbst handeln oder um Packmittel, wie z.B. Folienrollen, Trockenmittel enthaltende Verschlüsse und dergleichen. Die Verpackung kann z.B. ein Aluminium-Folien-verbund wobei andere Verpackungen nicht ausgeschlossen sind, da das Verfahren in erster Linie zur Messung der Feuchte ohne eine Zerstörung bzw. Beeinträchtigung der Umverpackung zu bewirken.

Eine Anwendung dieser Methode ist in der Packmittelentwicklung, beispielsweise im Rahmen von Stabilitätsuntersuchungen, denkbar. Ebenso ist eine Online-Kontrolle in der Produktion, beispielsweise an einzelnen kompletten Blisterkarten zur Kontrolle der Startfeuchte in den Kavitäten, möglich.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigt:
- Fig.1: eine schematische Darstellung der erfindungsgemäßen Vorrichtung,
- Fig.2: eine schematische Draufsicht auf eine Blisterkarte mit einem RFID-Chip zur Verwendung in der Vorrichtung nach Fig. 1,
- Fig.3: eine schematische Darstellung eines Frequenzbandes mit dem Bereich einer Sperrfrequenz für eine erste Variante einer metallischen Außenhülle und
- Fig.4: eine schematische Darstellung des Frequenzbandes mit dem Bereich der Sperr- frequenz für eine zweite Variante der metallischen Außenhülle.

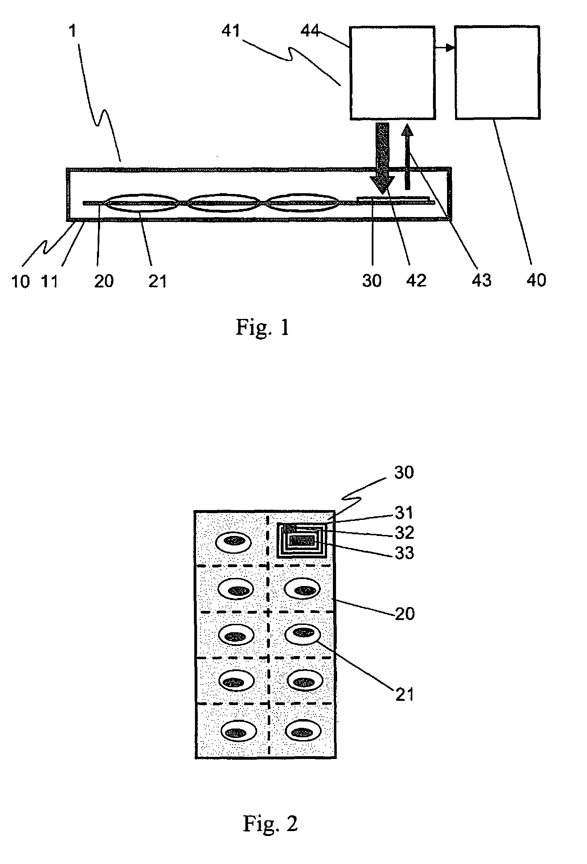

Eine Verpackungseinheit 1 besteht gemäß Fig. 1 aus einer Umverpackung 10 mit einer metallischen Außenhülle 11, die aus einer Aluminiumfolie oder einer Verbundfolie, bestehend aus mindestens einer Aluminiumschicht und mindestens einer weiteren Kunststoff- oder Papierschicht, aufgebaut ist. Vorliegend ist ein so genannter Pouchbeutel dargestellt, der eine Aluminium-Verbund-Folie mit einer ca. 20 µm dicken Aluminiumschicht besitzt. Im Inneren der Umverpackung 10 befindet sich eine Blisterkarte 20 mit mehreren Kavitäten 21 zur Aufnahme von pharmazeutischen Wirkstoffen, beispielsweise in Form von Tabletten oder Kapseln.

Auf der Blisterkarte 20 ist ein RFID-Chip 30 aufgeklebt, der mit einer Sende-/Empfangseinheit 41 (Lesegerät) außerhalb der Umverpackung 10 aktiviert und ausgelesen wird. Die Sende-/ Empfangseinheit 41 sendet ein Sendesignal 42 aus und empfängt ein Antwortsignal 43 des RFID-Chips 30, dessen Auswertung in einer mit der Sende-/Empfangseinheit 41 verbundenen Auswerteeinheit 44 erfolgt, die eine Messanordnung 40 umfasst.

Nach Fig. 2 ist der RFID-Chip 30 an Stelle einer Kavität 21 auf der Blisterkarte 20 vorgesehen, beispielsweise auf der Blisterkarte 20 aufgeklebt oder beim Verschließen der Kavitäten 21 mit verblistert. Die Blisterkarte 20 weist eine Aluminium-Verbund-Deckfolie auf, die den RFID-Chip 30 und die Kavitäten 21 abdeckt. Die Schichtdicke der Aluminiumschicht in der Deckfolie beträgt ca. 45 µm.

Der RFID-Chip 30 besteht im Wesentlichen aus einer Antennenstruktur 31 in Form einer gedruckten Spule und einem Schaltkreis 32, der im einfachsten Fall bei Aktivierung von außen lediglich das Antwortsignal 43 zurücksendet. In komplexeren RFID-Chips 30 kann der Schaltkreis 32 auch zusätzlich einen Code bei Aktivierung zurücksenden, mit dem beispielsweise der Inhalt der Blisterkarte 20 ausgelesen werden kann. Der hier dargestellte passive RFID-Chip 30 besitzt keine Batterie.

Im Weiteren umfasst der RFID-Chip 30 eine Kondensatorstruktur 33, deren Kapazität bzw. Kapazitätsänderung das Antwortsignal 43 des RFID-Chips 30 ändert. Die Antennenstruktur 33 dient dazu, mit der eingestrahlten Energie der Sende-/ Empfangseinheit 41 die Kondensatorstruktur 33 aufzuladen und damit genügend Energie bereitzustellen, damit der eigentliche Schaltkreis 32 des RFID-Chips 30 seine Daten an die Sende-/ Empfangseinheit 41 zurücksenden kann. Besitzt die Kondensatorstruktur 33 ein Dielektrikum, dessen Dielektrizitätskonstante ε von der relativen Feuchte (r.F.) abhängig ist, kann damit ein Schwingkreis realisiert werden, dessen Eigenschwingung vom Wert der Kapazität der Kondensatorstruktur 33 und damit von der relativen Feuchte (r.F) abhängig ist. Die Änderung der Frequenz des Antwortsignals 43 wird durch die Sende-/ Empfangseinheit 41 empfangen, mit einem Messverstärker der Messanordnung 40verstärkt und mittels einer durchstimmbaren Kapazitätsmessbrücke gemessen, woraus sich letztendlich die Feuchte in der Verpackungseinheit 1 bestimmen lässt.

Vor dem Verblistern des RFID-Chips 30 mit der Kondensatorstruktur 33 erfolgt eine Kalibrierung, bei der die Kondensatorstruktur 33 in einer dynamischen Sorptionswaage bei einer definierten Temperatur bestimmten Feuchtestufen ausgesetzt wird. Das Antwortsignal 43 des RFID-Chips 30 wird mit der Messanordnung 40 bei den verschiedenen Feuchtestufen gemessen und daraus wird eine von der Feuchte abhängige Eigenfrequenz bestimmt. Somit kann eine Kalibrierkurve feuchteabhängige Kapazität vs. Feuchtegehalt (bzw. vs. relative Feuchte) ermittelt werden.

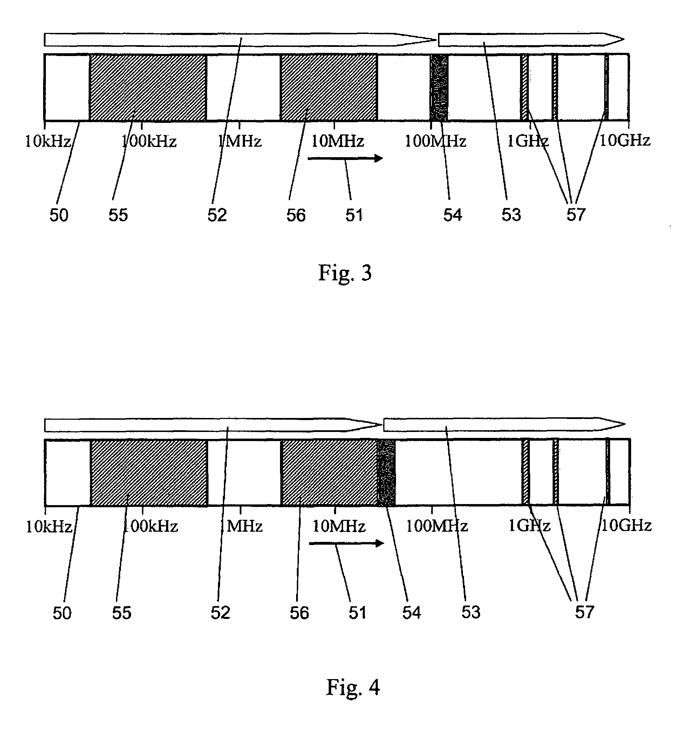

Der RFID-Chip 30 weist eine Arbeitsfrequenz auf, die in einem Frequenzband 50, bei dem die Frequenz 51 logarithmisch dargestellt ist, unterhalb eines Bereichs einer Sperrfrequenz 54 liegt, welche durch die Leitfähigkeit der metallische Außenhülle 11 und deren Dicke bestimmt ist. Unterhalb dieser Sperrfrequenz 54 weist das Frequenzband 50 einen Durchlässigkeitsbereich 52 und oberhalb einen Sperrbereich 53 auf. Die in Fig. 3 dargestellte Berechnung ergab für einen Aluminium-Pouch mit einer Aluminium-Foliendicke von 20 µm, dass der verwendete Pouch oberhalb einer Frequenz von etwa 100 MHz sperrt, d.h. das elektromagnetische Feld des Senders auf Werte unterhalb des 1/e-fachen des eingestrahlten Wertes gedämpft werden. Eine Arbeitsfrequenz UHF-RFID 57 für den RFID-Chip 30 von größer 100 MHz ist daher zum Auslesen der Information aus solch einem Pouch ungeeignet. Dies trifft insbesondere für die handelsüblichen UHF-RFId-Chips (UltraHochfrequenz) zu, deren Arbeitsfrequenz bei knapp 1 GHz, bei 2 bis 3 GHz oder bei knapp 6 GHz liegen. Dem gegenüber eignen sich zum Auslesen insbesondere die RFID-Chips 30 mit einer Arbeitsfrequenz LF-RFID 55 im Bereich von 30 kHz bis 500 kHz oder auch mit einer Arbeitsfrequenz HF-RFID 56 im Bereich von 3 MHz bis 30 MHz. In diesem Frequenzbereich ist der Aluminium-Pouch durchlässig.

Fig. 4 zeigt die Verhältnisse im Frequenzband 50 für eine Aluminiumschichtdicke von 45 µm, wie sie beispielsweise in einer Aluminium-Verbund-Deckfolie zum Verblistern von Blisterkarten 20 eingesetzt ist. Hier liegt der Bereich der Sperrfrequenz 54 bei etwa 30 MHz. Oberhalb dieser Frequenz sperrt die Aluminium-Verbund-Deckfolie die elektromagnetische Strahlung, so dass ein Auslesen nicht mehr möglich ist. Unterhalb dieser Sperrfrequenz 54 ist die Aluminium-Verbund-Deckfolie der Blisterkarte 20 durchlässig.

## Patentansprüche

1. System mit mindestens einem einer Verpackungseinheit (1) zugehörigen RF-Chip, der einen Schaltkreis (32) sowie eine Antennenstruktur (31) aufweist, und mit einer Sende-/ Empfangseinheit (41) zum Senden eines Sendesignals (42) und/oder Empfangen eines Antwortsignals (43) von dem RF-Chip, wobei das Antwortsignal (43) mittels einer an die Sende-/Empfangseinheit (41) angeschlossenen Auswerteeinheit (44) auswertbar ist, wobei
- der RF-Chip ein zur Radiofrequenz-Identifikation dienender RFID-Chip ist, **dadurch gekennzeichnet, dass**
- der RFID-Chip (30) von einer metallischen Außenhülle (11) der Verpackungseinheit (1) umschlossenen ist und
- der RFID-Chip (30) und die Sende-/Empfangseinheit (41) eine Arbeitsfrequenz aufweisen, die in einem Frequenz-band (50) unterhalb eines Bereichs einer Sperrfrequenz (54) liegt, die durch die Leitfähigkeit der metallischen Außenhülle (11) und deren Dicke bestimmt ist, und wobei der Bereich der Sperrfrequenz **dadurch** spezifiziert ist, dass das elektromagnetische Feld des Senders auf Werte unterhalb des 1/e-fachen des jeweiligen eingestrahlten Wertes gedämpft wird.

2. System nach Anspruch 1, **dadurch gekennzeichnet, dass** der RFID-Chip (30) eine Arbeitsfrequenz LF-RFID (55) im Bereich von 20 bis 500 kHz oder eine Arbeitsfrequenz HF-RFID (56) im Bereich von 3 bis 30 MHz aufweist.

3. System nach Anspruch 1 oder 2, **dadurch gekennzeichnet, dass** der RFID-Chip (30) einen Sensor aufweist, der das Antwortsignal (43) des RFID-Chips (30) beeinflusst.

4. System nach Anspruch 3, **dadurch gekennzeichnet, dass** der Sensor des RFID-Chips (30) als eine Kondensatorstruktur (33) ausgebildet ist und die Kapazität bzw. die Kapazitätsänderung der Kondensatorstruktur (33) das Antwortsignal (43) von dem RFID-Chip (30) ändert, das mit einer der Auswerteeinheit (44) zugeordneten Messanordnung (40) auswertbar ist

5. System nach Anspruch 4, **dadurch gekennzeichnet, dass** die Kondensatorstruktur (33) ein Dielektrikum umfasst, dessen Dielektrizitätskonstante ε von der relativen Feuchte (r.F.) bzw. von einer Gaskonzentration abhängig ist

6. System nach Anspruch 4, **dadurch gekennzeichnet, dass** die Messanordnung (40) zur Auswertung des Antwortsignals (43) einen Messverstärker und eine durchstimmbare Kapazitätsmessbrücke aufweist.

7. System nach einem der Ansprüche 1 bis 6, **dadurch gekennzeichnet, dass** die metallische Außenhülle (11) aus einer Aluminiumfolie oder einer Verbundfolie, bestehend aus mindestens einer Aluminiumschicht und mindestens einer weiteren Kunststoff- oder Papierschicht, aufgebaut ist.

8. System nach einem der Ansprüche 1 bis 7, **dadurch gekennzeichnet, dass** die metallische Außenhülle (11) eine 10 bis 50 µm dicke Aluminiumfolie bzw. Aluminiumschicht aufweist.

9. System nach einem der Ansprüche 1 bis 8, **dadurch gekennzeichnet, dass** die metallische Außenhülle (11) Bestandteil einer Umverpackung (10) ist.

10. System nach Anspruch 9, **dadurch gekennzeichnet, dass** der RFID-Chip (30) innerhalb der Umverpackung (10) auf einer separaten Kunststoffkarte befestigt ist.

11. System nach Anspruch 9, **dadurch gekennzeichnet, dass** der RFID-Chip (30) innerhalb der Umverpackung (10) auf der Innenseite der Umverpackung (10) befestigt ist.

12. System nach Anspruch 9, **dadurch gekennzeichnet, dass** die Umverpackung (10) mindestens eine Blisterkarte (20) aufweist, auf der der RFID-Chip (30) befestigt ist

13. System nach einem der Ansprüche 1 bis 8, **dadurch gekennzeichnet, dass** die metallische Außenhülle (11) Bestandteil einer Aluminium-Verbund-Deckfolie einer Blisterkarte (20) ist, wobei sich der RFID-Chip (30) auf der Blisterkarte (20) oder innerhalb einer Kavität (21) der Blisterkarte (20) befindet und von der Aluminium-Verbund-Deckfolie abgedeckt ist.

14. System nach Anspruch 13, **dadurch gekennzeichnet, dass** der RFID-Chip (30) innerhalb der Kavität (21) auf einer separaten Kunststoffkarte befestigt ist.

15. System nach einem der Ansprüche 1 bis 14, **dadurch gekennzeichnet, dass** die Verpackungseinheit (1) für pharmazeutische Produkte verwendet wird.

16. Verfahren zur Identifikation von Inhalt und/oder Zustand einer Verpackungseinheit mit einem zur Radiofrequenz-Identifikation dienenden RFID-Chip (30), der einen Schaltkreis (32) sowie eine Antennenstruktur (31) aufweist, wobei mit einer Sende-/Empfangseinheit (41) ein Sendesignal (42) gesendet und/oder ein Antwortsignal (43) von dem RFID-Chip (30) empfangen wird und das Antwortsignal (43) mittels einer an die Sende-/Empfangs-einheit (41) angeschlossenen Auswerteeinheit (44) ausgewertet wird, **dadurch gekennzeichnet, dass** der von einer metallischen Außenhülle (11) als Teil der Verpackungseinheit (1) umschlossene oder abgedeckte RFID-Chip (30) mit einer Arbeitsfrequenz betrieben wird, die in einem Frequenzband (50) unterhalb eines Bereichs einer Sperrfrequenz (54) liegt, die durch die Leitfähigkeit der metallische Außenhülle (11) und deren Dicke bestimmt wird, und wobei der Beirech der Sperrfrequenz **dadurch** spezifiziert ist, dass das elektromagnetische Feld des Senders auf werte unterhalb des 1/e-fachen des jeweiligen eingestrahlten wertes gedämpft wird, und wobei die Sende-/Empfangseinheit die selbe Arbeitsfrequenz aufweist.

17. Verfahren nach Anspruch 16, **dadurch gekennzeichnet, dass** der RFID-Chip (30) mit einer Arbeitsfrequenz LF-RFID (55) im Bereich von 20 bis 500 kHz oder eine Arbeitsfrequenz HF-RFID (56) im Bereich von 3 bis 30 MHz betrieben wird.

18. Verfahren nach Anspruch 16 oder 17, **dadurch gekennzeichnet, dass** das Antwortsignal (43) des RFID-Chips (30) mittels eines an den RFID-Chips (30) angeschlossenen bzw. im RFID-Chip (30) integrierten Sensors hinsichtlich seiner Kodierung und / oder seiner Antwortfrequenz beeinflusst wird und von der Sende-/Empfangseinheit (41) empfangen und ausgewertet wird.

19. Verfahren nach einem der Ansprüche 16 bis 18, **dadurch gekennzeichnet, dass** das Antwortsignal (43) des RFID-Chips (30) mittels einer Kondensatorstruktur (33), die mit dem RFID-Chip (30) verbunden ist oder in diesem integriert ist und dessen Dielektrizitätskonstante s von der relativen Feuchte (r.F.) bzw. von einer Gaskonzentration beeinflusst wird, hinsichtlich seiner Frequenz verändert und von einer Messanordnung (40) der Auswerteeinheit (44) der Sende-/ Empfangseinheit (41) empfangen und ausgewertet wird.

20. Verfahren nach Anspruch 19, **dadurch gekennzeichnet, dass** das Antwortsignal (43) des RFID-Chips (30) mittels eines Messverstärkers innerhalb der Messanordnung (40) verstärkt und mittels einer durchstimmbaren Kapazitätsmessbrücke innerhalb der Messanordnung (40) durch Vergleich mit einer Referenzkapazität innerhalb der Kapazitätsmessbrüicke die Kapazität der Kondensatorstruktur (33) des RFID-Chip (30) bestimmt wird.

21. Verfahren nach einem der Ansprüche 18 bis 20, **dadurch gekennzeichnet, dass** vor dem Verpacken des RFID-Chips (30) mit dem Sensor bzw. der Kondensatorstruktur (33) in die Verpackungseinheit (1) eine Kalibrierung durchgeführt wird.

22. Verfahren nach Anspruch 21, **dadurch gekennzeichnet, dass** der RFID-Chip (30) mit der Koudensatorstruktur (33) zum Kalibrieren in einer dynamischen Sorptionswaage bei einer definierten Temperatur bestimmten Feuchtestufen ausgesetzt, das Antwortsignal (43) des RFID-Chips (30) mit der Messanordnung (40) bei den verschiedenen Feuchtestufen gemessen und daraus eine von der Feuchte abhängige Eigenfrequenz bestimmt wird.

23. Anwendung des Verfahrens nach einem der Ansprüche 18 bis 22 zur Messung der Feuchte bzw. einer Gaskonzentration in Blistern, Pouches, Polymer-Blistern, Flaschen oder allgemein in Behältern und/oder Verpackungen mit Volumina vom ml-Bereich bis hin zu größeren Containern, sowie in der Packmittelentwicklung und zur Online-Kontrolle in der Produktion.

## Claims

1. System having at least one RF chip belonging to a packaging unit (1), said chip comprising a switching circuit (32) and an antenna structure (31), and having a transmitting/receiving unit (41) for transmitting a transmission signal (42) and/or receiving a response signal (43) from the RF chip, the response signal (43) being capable of evaluation by an evaluating unit (44) connected to the transmitting/receiving unit (41), wherein
- the RF chip is an RFID-chip serving for radiofrequency Identification, **characterised in that**
- the RFID chip (30) is surrounded by a metal outer casing (11) of the packaging unit (1) and
- the RFID chip (30) and the transmitting/receiving unit (41) have an operating frequency which is In a frequency band (50) below a range of a blocking frequency (54) which is determined by the conductivity of the metal outer casing (11) and its thickness, and wherein the range of the blocking frequency is determined by the fact that the electromagnetic field of the transmitter is attenuated to values below the 1/e^{th} of the particular irradiated value.

2. System according to claim 1, **characterised in that** the RFID chip (30) has an operating frequency LF-RFID (55) in the range from 20 to 500 kHz or an operating frequency HF-RFID (56) In the range from 3 to 30 MHz.

3. System according to claim 1 or 2, **characterised in that** the RFID chip (30) has a sensor which influences the response signal (43) of the RFID chip (30).

4. System according to claim 3, **characterised in that** the sensor of the RFID chip (30) is constructed as a capacitor structure (33) and the capacitance or change in capacitance of the capacitor structure (33) modifies the response signal (43) from the RFID chip (30) which can be evaluated with a measuring arrangement (40) associated with the evaluating unit (44).

5. System according to claim 4, **characterised in that** the capacitor structure (33) comprises dielectric, the dielectric constant ε of which is dependent on the relative humidity (r.h.) or on a gas concentration.

6. System according to claim 4, **characterised in that** the measuring arrangement (40) comprises, for evaluating the response signal (43), a measuring amplifier and a tuneable capacitance measuring bridge.

7. System according to one of claims 1 to 6, **characterised in that** the metal outer casing (11) is made up of an aluminium film or a composite film consisting of at least one aluminium layer and at least one other layer of plastics or paper.

8. System according to one of claims 1 to 7, **characterised in that** the metal outer casing (11) has a 10 to 50 µm thick aluminium film or aluminium layer.

9. System according to one of claims 1 to 8, **characterised in that** the metal outer casing (11) is part of an outer packaging (10).

10. System according to claim 9, **characterised in that** the RFID chip (30) is attached to a separate plastic card inside the outer packaging (10).

11. System according to claim 9, **characterised In that** the RFID chip (30) is attached to the inside of the outer packaging (10) inside the outer packaging (10).

12. System according to claim 9, **characterised in that** the outer packaging (70) comprises at least one blister card (20) to which the RFID chip (30) is attached.

13. System according to one of claims 1 to 8, **characterised in that** the metal outer casing (11) is part of an aluminium composite cover film of a blister card (20), the RFID chip (30) being located on the blister card (20) or inside a cavity (21) in the blister card (20) and covered by the aluminium composite cover film.

14. System according to claim 13, **characterised in that** the RFID chip (30) is attached to a separate plastic card inside the cavity (21).

15. System according to one of claims 1 to 14, **characterised in that** the packaging unit (1) is used for pharmaceutical products.

16. Method of identifying the contents and/or condition of a packaging unit with an RFID chip (30) serving for radiofrequency identification, which has a switching circuit (32) and an antenna structure (31), wherein a transmitting/receiving unit (41) sends a transmission signal (42) and/or receives a response signal (43) from the RFID chip (30) and the response signal (43) is evaluated by means of an evaluating unit (44) connected to the transmitting/receiving unit (41), **characterised in that** the RFID chip (30) surrounded or covered by a metal outer casing (11) as part of the packaging unit (1) is operated at an operating frequency that lies in a frequency band (50) below a range of a blocking frequency (54) which is determined by the conductivity of the metal outer casing (11) and its thickness, and wherein the range of the blocking frequency is determined by the fact that the electromagnetic field of the transmitter is attenuated to values below the 1/e^{th} of the particular irradiated value, and wherein the transmitting/receiving unit has the same operating frequency.

17. Method according to claim 16, **characterised in that** the RFID chip (30) is operated at an operating frequency LF-RFID (55) in the range from 20 to 500 kHz or an operating frequency HF-RFID (56) in the range from 3 to 30 MHz.

18. Method according to claim 16 or 17, **characterised in that** the response signal (43) of the RFID chip (30) is influenced in its coding and/or response frequency by means of a sensor connected to the RFID chips (30) or integrated in the RFID chip (30) and is received and evaluated by the transmitting/receiving unit (41).

19. Method according to one of claims 16 to 18, **characterised In that** the response signal (43) of the RFID chip (30) is modified in its frequency by means of a capacitor structure (33) which is connected to the RFID chip (30) or is integrated therein and the dielectric constant ε of which is influenced by the relative humidity (r.h.) or by a gas concentration, and is received and evaluated by a measuring arrangement (40) of the evaluating unit (44) of the transmitting/receiving unit (41).

20. Method according to claim 19, **characterised in that** the response signal (43) of the RFID chip (30) is amplified by means of a measuring amplifier within the measuring arrangement (40) and the capacitance of the capacitor structure (33) of the RFID chip (30) is determined by means of a tuneable capacitance measuring bridge within the measuring arrangement (40) by comparison with a reference capacitance within the capacitance measuring bridge.

21. Method according to one of claims 18 to 20, **characterised in that** before the RFID chip (30) with the sensor or the capacitor structure (33) is packed into the packaging unit (1) calibration Is carried out.

22. Method according to claim 21, **characterised in that**, for the calibration, the RFID chip (30) with the capacitor structure (33) is subjected to specified humidity levels at a defined temperature In a dynamic vapour sorption scale, the response signal (43) from the RFID chip (30) is measured with the measuring arrangement (40) at the different humidity levels and from this an inherent frequency dependent on the humidity is determined.

23. Application of the method according to one of claims 18 to 22 to the measurement of humidity or a gas concentration in blisters, pouches, polymer blisters, bottles or containers and/or packaging in general with volumes ranging from the ml range to larger containers, and in the development of packaging and for online monitoring during production.

## Revendications

1. Système avec une puce RF, qui est associée à une unité d'emballage (1) et qui comporte un circuit de commande (32), ainsi qu'une structure d'antenne (31), et avec une unité d'émission/réception (41) pour émettre un signal d'émission (42) et/ou pour recevoir un signal de réponse (43) de la puce RF, le signal de réponse (43) pouvant être analysé au moyen d'une unité d'analyse (44) raccordée à l'unité d'émission-réception (41), dans lequel
- la puce RF est une puce RFID destinée à une radio-identification,
**caractérisé en ce que**
- la puce RFID (30) est entourée par une enveloppe extérieure (11) métallique de l'unité d'emballage (1), et
- la puce RFID (30) et l'unité d'émission/ réception (41) ont une fréquence de travail qui se situe dans une bande de fréquence (50) en dessous d'une zone d'une fréquence d'arrêt (54) qui est déterminée par la conductibilité de l'enveloppe extérieure (11) métallique et par l'épaisseur de celle-ci, la zone de la fréquence d'arrêt étant spécifiée par le fait que le champ électromagnétique de l'émetteur est affaibli à des valeurs inférieures au facteur 1/e de la valeur incidente respective.

2. Système selon la revendication 1, **caractérisé en ce que** la puce RFID (30) possède une fréquence de travail LF-RFID (55) dans la plage de 20 à 500 kHz ou une fréquence de travail HF-RFID (56) dans la plage de 3 à 30 MHz.

3. Système selon la revendication 1 ou 2, **caractérisé en ce que** la puce RFID (30) comporte un capteur qui influence le signal de réponse (43) de la puce RFID (30).

4. Système selon la revendication 3, **caractérisé en ce que** le capteur de la puce RFID (30) est réalisé sous la forme d'une structure de condensateur (33), et la capacité ou la variation de la capacité de la structure de condensateur (33) modifie le signal de réponse (43) de la puce RFID (30), lequel peut être analysé par un dispositif de mesure (40) associé à l'unité d'analyse (44).

5. Système selon la revendication 4, **caractérisé en ce que** la structure de condensateur (33) comprend un diélectrique, dont la constante diélectrique ε dépend de l'humidité relative (r.F.) ou d'une concentration de gaz.

6. Système selon la revendication 4, **caractérisé en ce que** le dispositif de mesure (40) destiné à évaluer le signal de réponse (43) comporte un amplificateur de mesure et un pont de mesure des capacités ajustable.

7. Système selon l'une quelconque des revendications 1 à 6, **caractérisé en ce que** l'enveloppe extérieure (11) métallique est réalisée dans une feuille d'aluminium ou une feuille composite, formée par au moins une couche d'aluminium et au moins une couche supplémentaire en matière plastique ou en papier.

8. Système selon l'une quelconque des revendications 1 à 7, **caractérisé en ce que** l'enveloppe extérieure (11) métallique comporte une feuille d'aluminium ou une couche d'aluminium avec une épaisseur de 10 à 50 µm.

9. Système selon l'une quelconque des revendications 1 à 8, **caractérisé en ce que** l'enveloppe extérieure (11) métallique est une partie intégrante d'un suremballage (10).

10. Système selon la revendication 9, **caractérisé en ce que** la puce RFID (30) est fixée à l'intérieur du suremballage (10) sur une carte plastique séparée.

11. Système selon la revendication 9, **caractérisé en ce que** la puce RFID (30) est fixée à l'intérieur du suremballage (10) sur la face intérieure du suremballage (10).

12. Système selon la revendication 9, **caractérisé en ce que** le suremballage (10) comporte au moins une carte blister (20), sur laquelle est fixée la puce RFID (30).

13. Système selon l'une quelconque des revendications 1 à 8, **caractérisé en ce que** l'enveloppe extérieure (11) métallique est une partie intégrante d'une feuille de protection composite, à base d'aluminium, d'une carte blister (20), la puce RFID (30) étant située sur la carte blister (20) ou à l'intérieur d'une cavité (21) de la carte blister (20), et étant recouverte par la feuille de protection composite à base d'aluminium.

14. Système selon la revendication 13, **caractérisé en ce que** la puce RFID (30) est fixée à l'intérieur de la cavité (21) sur une carte plastique séparée.

15. Système selon l'une quelconque des revendications 1 à 14, **caractérisé en ce que** l'unité d'emballage (1) est utilisée pour des produits pharmaceutiques.

16. Procédé destiné à l'identification du contenu et/ou de l'état d'une unité d'emballage avec une puce RFID (30) utilisée pour la radio-identification, laquelle comporte un circuit de commande (32), ainsi qu'une structure d'antenne (31), sachant qu'avec une unité d'émission/réception (41) est émis un signal d'émission (42) et/ou est reçu un signal de réponse (43) de la puce RFID (30), et le signal de réponse (43) est analysé au moyen d'une unité d'analyse (44) raccordée à l'unité d'émission/réception (41), **caractérisé en ce que**
la puce RFID (30), entourée ou recouverte par une enveloppe extérieure (11) métallique faisant partie de l'unité d'emballage (1), est actionnée avec une fréquence de travail, qui se situe dans une bande de fréquence (50) en dessous d'une zone d'une fréquence d'arrêt (54) qui est déterminée par la conductibilité de l'enveloppe extérieure (11) métallique et par l'épaisseur de celle-ci, la zone de la fréquence d'arrêt étant spécifiée par le fait que le champ électromagnétique de l'émetteur est affaibli à des valeurs inférieures au facteur 1/e de la valeur incidente respective, et l'unité d'émission/réception ayant la même fréquence de travail.

17. Procédé selon la revendication 16, **caractérisé en ce que** la puce RFID (30) est actionnée avec une fréquence de travail LF-RFID (55) dans la plage de 20 à 500 kHz ou une fréquence de travail HF-RFID (56) dans la plage de 3 à 30 MHz.

18. Procédé selon la revendication 16 ou 17, **caractérisé en ce que** le signal de réponse (43) de la puce RFID (30) est influencé, sur le plan de son codage et/ou de sa fréquence de réponse, au moyen d'un capteur raccordé à la puce RFID (30) ou intégré dans la puce RFID (30), et est reçu et analysé par l'unité d'émission/réception (41).

19. Procédé selon l'une quelconque des revendications 16 à 18, **caractérisé en ce que** le signal de réponse (43) de la puce RFID (30) est influencé au moyen d'une structure de condensateur (33), qui est reliée à la puce RFID (30) ou est intégrée dans celle-ci et dont la constante diélectrique ε dépend de l'humidité relative (r.F.) ou d'une concentration de gaz, est modifié sur le plan de sa fréquence et est reçu et évalué par un dispositif de mesure (40) de l'unité d'analyse (44) de l'unité d'émission/réception (41).

20. Procédé selon la revendication 19, **caractérisé en ce que** le signal de réponse (43) de la puce RFID (30) est amplifié à l'intérieur du dispositif de mesure (40) au moyen d'un amplificateur de mesure, et la capacité de la structure de condensateur (33) de la puce RFID (30) est déterminée au moyen d'un pont de mesure des capacités ajustable, à l'intérieur du dispositif de mesure (40), par comparaison avec une capacité de référence à l'intérieur du pont de mesure des capacités.

21. Procédé selon l'une quelconque des revendications 18 à 20, **caractérisé en ce qu'**un étalonnage est effectué avant l'emballage de la puce RFID (30) avec le capteur et la structure de condensateur (33) dans l'unité d'emballage (1).

22. Procédé selon la revendication 21, **caractérisé en ce que** la puce RFID (30) avec la structure de condensateur (33), en vue de l'étalonnage, est exposée dans une balance de sorption dynamique à des niveaux d'humidité déterminés et à une température définie, le signal de réponse (43) de la puce RFID (30) est mesuré aux différents niveaux d'humidité avec le dispositif de mesure (40), et ainsi une fréquence intrinsèque qui dépend de l'humidité est déterminée.

23. Utilisation du procédé selon l'une quelconque des revendications 18 à 22 pour la mesure de l'humidité ou d'une concentration de gaz dans des blisters, des poches, des blisters en polymère, des bouteilles ou en général dans des récipients et/ou des emballages avec des volumes de l'ordre du ml jusqu'à des conteneurs plus grands, ainsi que dans le développement des moyens d'emballage et pour le contrôle enligne dans la production.
